# EUROPEAN PATENT APPLICATION

(11) **EP 0 990 581 A1**
(43) Date of publication of application: **05.04.2000**
(21) Application number: 98118303.1
(22) Date of filing: 28.09.1998
(51) Int. Cl.: B62J 15/02

(54) **Bicycle fender mounting arrangement**

(71) Applicant: Huang, Kuei C., Ban-Chiau City, Taipei Hsien (TW)
(72) Inventor: Huang, Kuei C., Ban-Chiau City, Taipei Hsien (TW)
(74) Representative: Kador & Partner

(57) **Abstract**

A bicycle fender mounting arrangement includes a L-shaped retainer plate (1) having a retaining hole (12) and a vertical through hole (13) at its horizontal half and a horizontal through hole (11) at its vertical half, a fender (4) having a peripheral edge (41) engaged into the retaining hole (12) at the retainer plate (1), a screw rod (2) inserted through the horizontal hole (11) of the retainer plate (1), a supporting wire rod (3) having a top end inserted through a through hole (21) at one end of the screw rod (2) and the vertical through hole (13) of the retainer plate (1) and fastened up with an end cap (32) and a bottom end (31) fastened to the hub of a bicycle wheel, and a lock nut (23) threaded onto the screw rod (2) and stopped at one side of the vertical half of the retainer plate (1) opposite to the supporting wire rod (3) to secure the supporting wire rod (3) in place and to keep the supporting wire rod (3) away from the periphery of the bicycle wheel.

## Description

### BACKGROUND OF THE INVENTION

The present invention relates to a bicycle fender mounting arrangement, and more particularly to such a bicycle fender mounting arrangement which keeps the fender supporting wire rod constantly away from touching the periphery of the bicycle wheel.

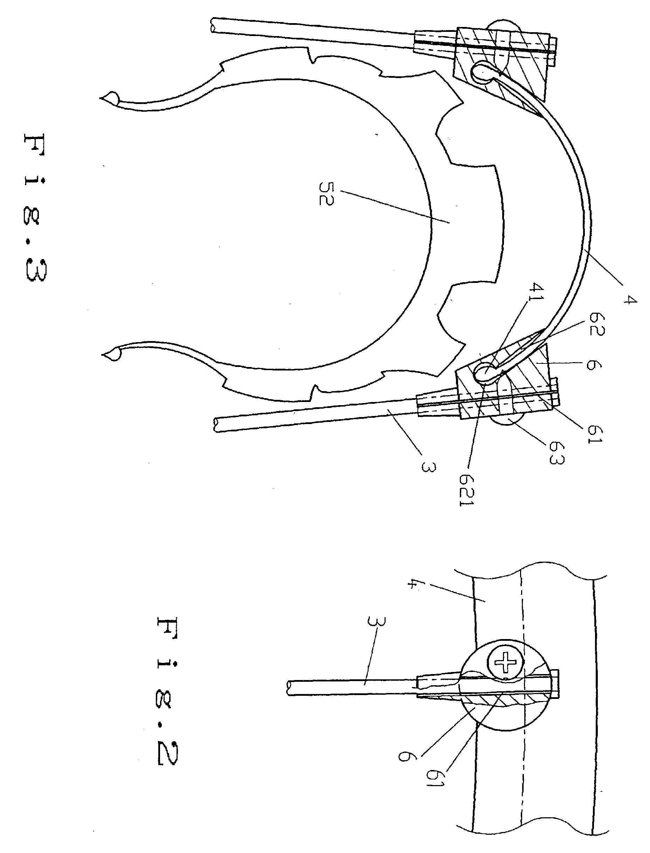

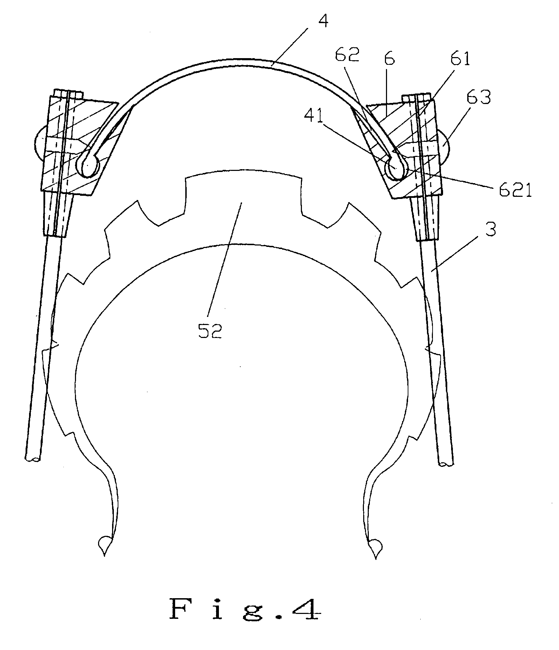

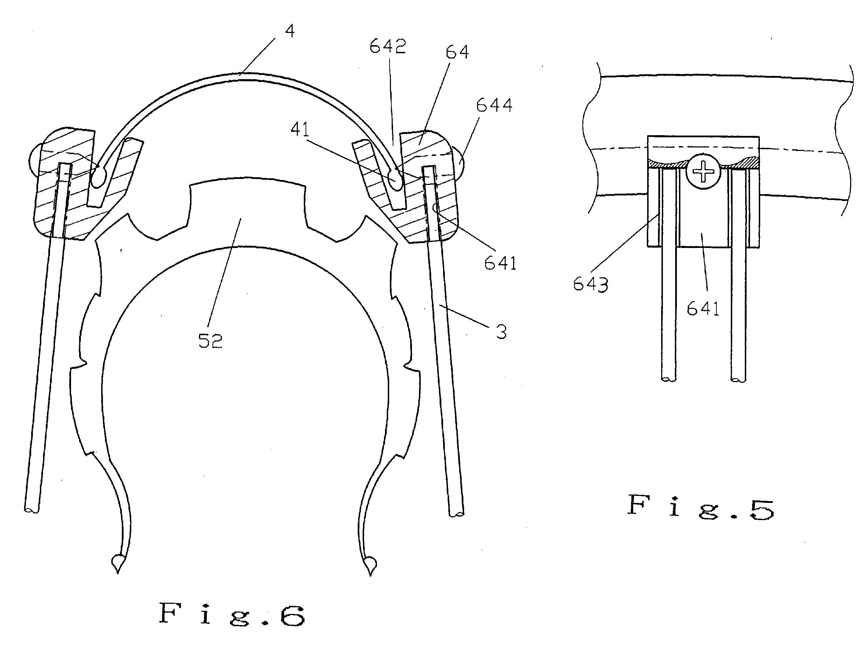

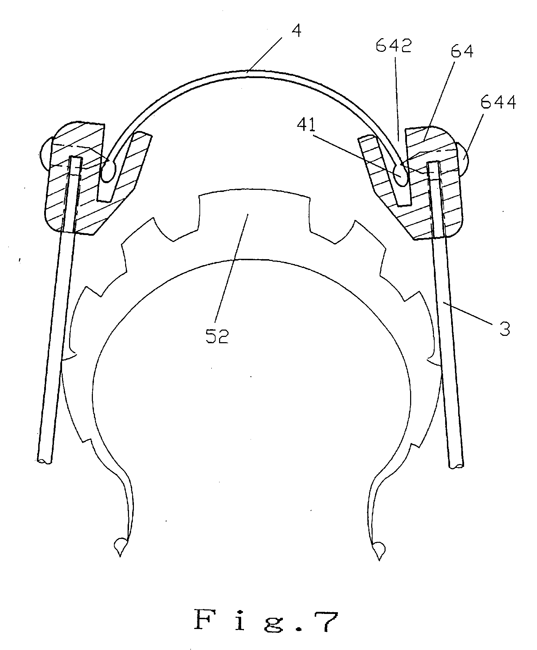

In a regular bicycle, a front fender **4** is mounted around the front wheel and suspended below the down tube **5,** and a plurality of supporting wire rods **3** are provided to support the front fender **4** in place, each supporting wire rod **3** having a bottom end connected to a hook **31**, which is fastened to the hub **511** of the front wheel at the bottom end of the front fork **51**, and a top end connected to one peripheral side edge of the front fender **4** by a retainer plate **1**. Referring to Figures 2 and 3, the retainer plate, referenced by **6**, is a wedge-like block having a longitudinal through hole **61**, which receives one supporting wire rod **3**, and an oblique retaining slot **62**, which receives the peripheral side wall of the fender **4**. The oblique retaining slot **62** has an expanded bottom end **621**, which receives the flanged peripheral side edge **41** at one lateral side of the fender **4**. When the fender **4**, the retainer block **6** and the supporting wire rod **3** are connected together, a tap screw **63** is threaded into the retainer block **6** and stopped against the peripheral side wall of the fender **4** to fix the supporting wire rod **3** and the fender **4** in place. Because the end of the tap screw **63** is directly engaged into the surface of the peripheral wall of the fender **4**, the surface of the peripheral wall of the fender **4** is destroyed, causing the fender **4** to be quickly covered with rust. Further, because the space between the periphery of the tire **52** and the supporting wire rod **3** is narrow, the supporting wire rod **3** may touch the periphery of the tire **52** when the tire **52** is exhausted and flattened, causing a resistance to be produced between the tire **52** and the supporting wire rod **3** (see Figure 4). Figures 5 and 6 show another structure of retainer block **64** according to the prior art. This structure of retainer block **64** has a substantially S-shaped cross section, a downwardly extended mounting slot **641**, at least one plug hole **643** in the downwardly extended mounting slot **641**, each plug hole **643** receiving a respective supporting wire rod **3**, and an upwardly extended retaining slot **642**, which receives the corresponding peripheral side edge **41** of the fender **4**. Further, a tap screw **644** is threaded into the retainer plate **64** between two plug holes **643** and stopped against the peripheral wall of the fender **4** to fix the fender **4** in place. Because the end of the tap screw **643** is directly engaged into the surface of the peripheral wall of the fender 4, the surface of the peripheral wall of the fender **4** is destroyed, causing the fender **4** to be quickly covered with rust. Further, because the space between the periphery of the tire **52** and each supporting wire rod **3** is narrow, the supporting wire rod **3** may touch the periphery of the tire **52** when the tire **52** is exhausted and flattened, causing a resistance to be produced between the tire **52** and each supporting wire rod **3** (see Figure 7).

### SUMMARY OF THE INVENTION

The present invention has been accomplished to eliminate the aforesaid drawbacks. According to the present invention, the bicycle fender mounting arrangement comprises a L-shaped retainer plate having a retaining hole and a vertical through hole at its horizontal half and a horizontal through hole at its vertical half, a fender having a peripheral side edge engaged into the retaining hole at the retainer plate, a screw rod inserted through the horizontal through hole of the retainer plate, a supporting wire rod having a top end inserted through a through hole at one end of the screw rod and the vertical through hole of the retainer plate and fastened up with an end cap and a bottom end fastened to the hub of a bicycle wheel, and a lock nut threaded onto the screw rod and stopped at one side of the vertical half of the retainer plate opposite to the supporting wire rod to secure the supporting wire rod in place and to keep the supporting wire rod away from the periphery of the bicycle wheel. Because the retainer block has a substantially L-shaped profile, the supporting wire rod is maintained spaced from the periphery of the tire at a distance, the supporting wire rod does not touch the periphery of the tire even if the tire is exhausted. Furthermore, because the peripheral side edge of the fender is directly hung on the retainer plate and no tightening up screw means as used to fix the fender in place, the surface of the fender is not damaged when the fender is installed.

### BRIEF DESCRIPTION OF THE DRAWINGS

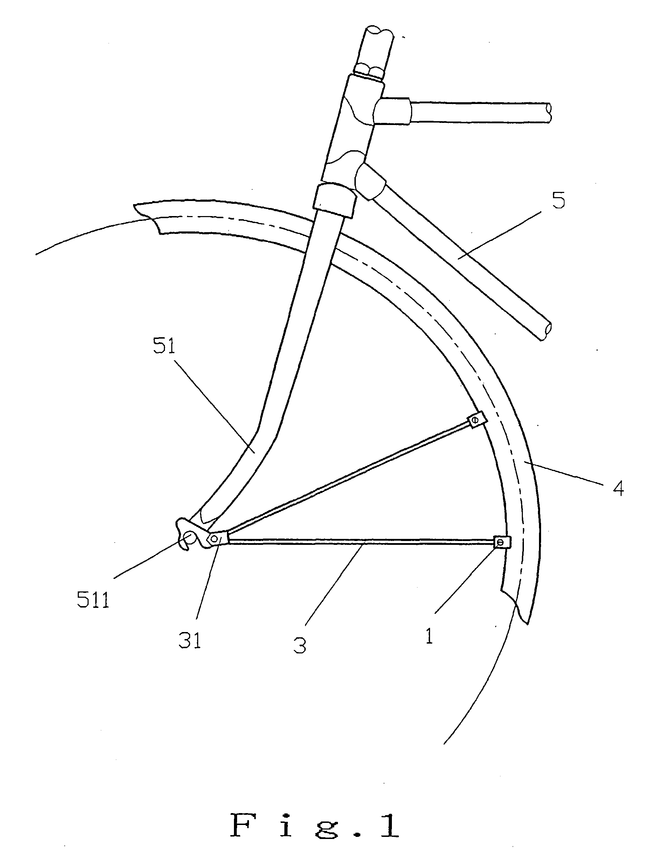

Figure 1 shows a bicycle (front) fender installed in a bicycle according to the prior art.
Figure 2 is a side plain view of a bicycle fender mounting arrangement according to the prior art.
Figure 3 is a cross sectional view of the bicycle fender mounting arrangement shown in Figure 2.
Figure 4 is similar to Figure 3 but showing the tire exhausted, the supporting wire rods retained in contact with the 'periphery of the tire.
Figure 5 is a side plain view of another bicycle fender mounting arrangement according to the prior art.
Figure 6 is a cross sectional view of the bicycle fender mounting arrangement shown in Figure 5.
Figure 7 is similar to Figure 6 but showing the tire exhausted, the supporting wire rods retained in contact with the periphery of the tire.
Figure 8 is an exploded view of a bicycle fender mounting arrangement according to a first embodiment of the present invention.
Figure 9 is sectional elevation showing the bicycle fender mounting arrangement of the first embodiment of the present invention assembled.
Figure 10 is an applied view of the first embodiment of the present invention.
Figure 11 is a side plain view of Figure 10.
Figure 12 is similar to Figure 10 but showing the tire exhausted, the supporting wire rods maintained spaced from the periphery of the tire.

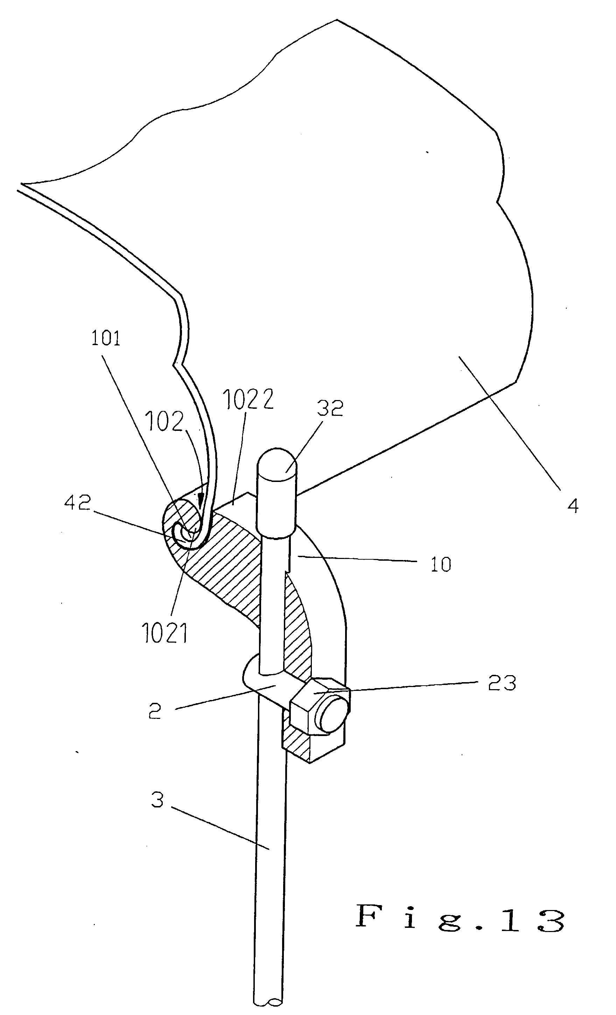

Figure 13 is sectional elevation of a bicycle fender mounting arrangement according to a second embodiment of the present invention.
Figure 14 is an applied view of the second embodiment of the present invention.
Figure 15 is a side plain view of Figure 14.
Figure 16 is similar to Figure 14 but showing the tire exhausted, the supporting wire rods maintained spaced from the periphery of the tire.

### DETAILED DESCRIPTION OF THE PREFERRED EMBODIMENT

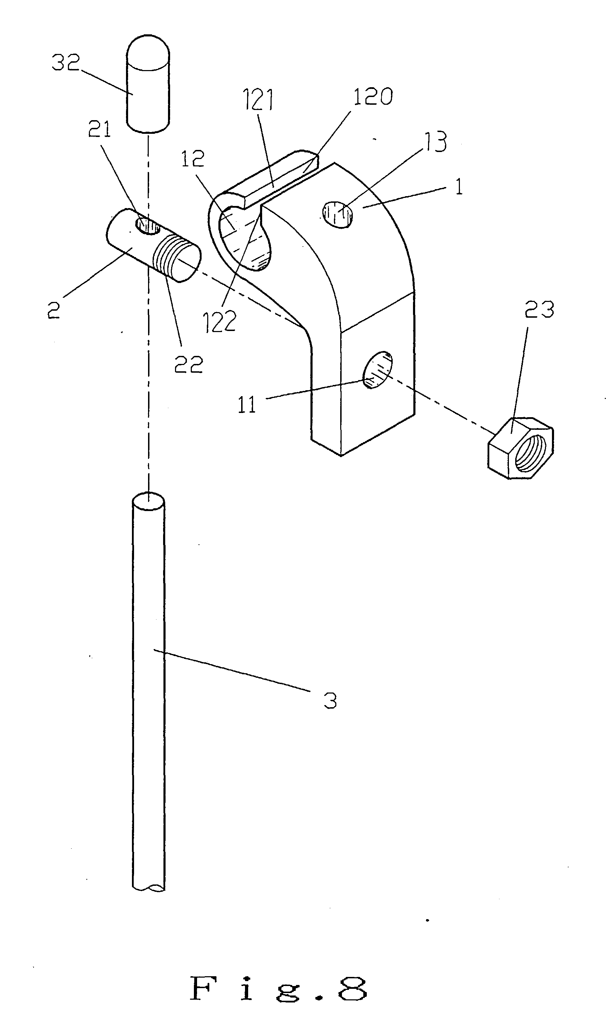

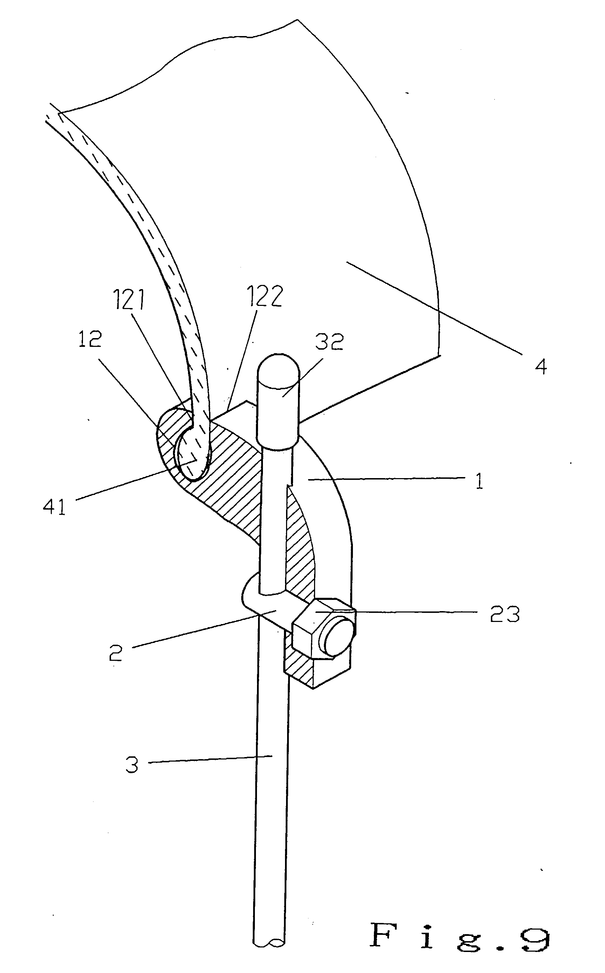

Referring to Figures 8 and 9, a bicycle fender mounting arrangement is shown comprised of a retainer plate **1**, a screw rod **2**, a lock nut **23**, a supporting wire rod **3**, an end cap **32**, and a fender **4**.

The retainer plate **1** is a substantially L-shaped member having a horizontal half and a vertical half, a barrel-like retaining hole **12** transversely disposed at one end of the horizontal half remote from the vertical half two parallel stop edges **121,122** transversely disposed at one end of the horizontal half above the retaining hole **12**, a narrow mouth **120** defined between the stop edges **121,122** in communication with the retaining hole **12**, a vertical through hole **13** at the horizontal half between the retaining portion **12** and the vertical half and a horizontal through hole **11** at the vertical half The width of the narrow mouth **120** is slightly greater than the wall thickness of the fender **4**. The screw rod **2** has an outer thread **22** around the periphery at one end, and a transverse through hole **21** at an opposite end. The supporting wire rod **3** is inserted through the through hole **21** on the screw hole **2** and the vertical through hole **13** on the retainer plate **1**. The end cap **32** is fastened to one end namely the top end of the supporting wire rod **3**, and stopped against the retainer plate **1** above the vertical through hole **13**. The lock nut **23** is threaded onto the outer thread **22** and stopped against the retainer plate **1** at one end of the horizontal through hole **11** to secure the screw rod **2**, the supporting wire rod **3** and the retainer plate **1** together. The fender **4** has two flanged peripheral side edges **41** at two opposite lateral sides of the fender wall thereof.

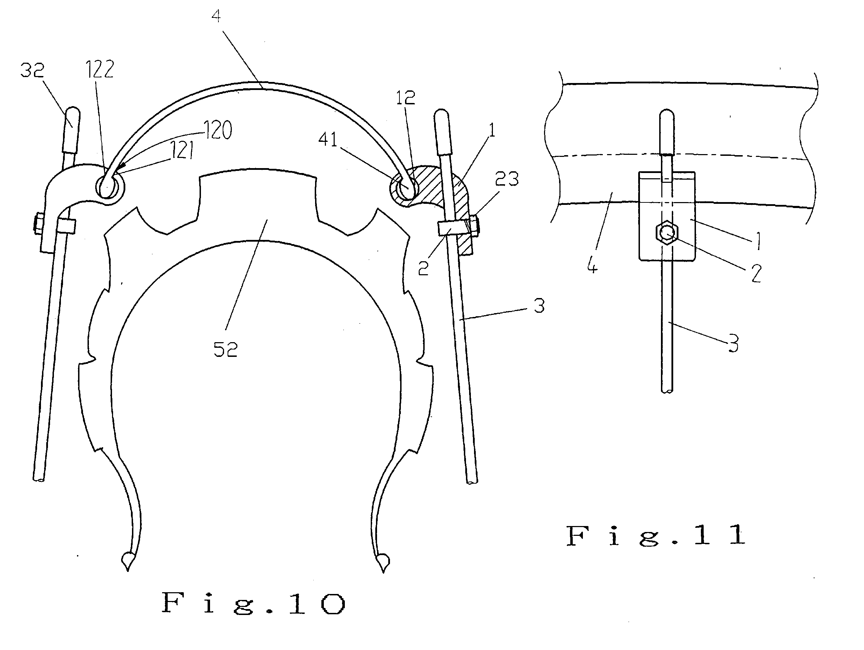

The installation of the present invention is outlined hereinafter with reference to Figures 10 and 11 and Figure 9 again, the retainer plate **1** is attached to the fender **4**, permitting the fender wall of the fender **4** to be inserted into the narrow mouth **120** and one flanged peripheral side edge **41** of the fender **4** to be retained in the retaining hole **12**, then the supporting wire rod **3** is inserted through the through hole **21** on the screw hole **2** and the vertical through hole **13** on the retainer plate **1**, permitting the outer thread **22** of the screw rod **2** to be inserted with the screw rod **2** through the horizontal through hole **11** on the retainer plate **1**, and then the end cap **32** is fastened to the tap end of the supporting wire rod **3** and stopped against the retainer plate **1** above the vertical through hole **13**, and then the lock nut **23** is threaded onto the outer thread **22** of the screw rod **2** and stopped against the retainer plate **1** at one end of the horizontal through hole **11**. When installed, the fender **4** is suspended around the periphery of the tire **52**.

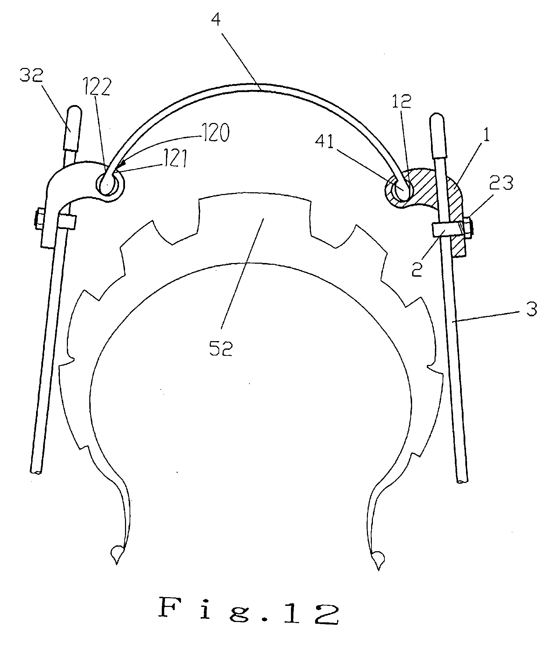

Referring to Figure 12 and Figure 10 again, when two sets of retainer plates **1**, screw rods **2**, lock nuts **23**, supporting wire rods **3** and end caps **32** are installed and fastened to the two opposite flanged peripheral side edges **41** of the fender **4**, the supporting wire rods **3** are maintained at a distance from the periphery of the tire **52** (see Figure 10). Because the retainer plates **1** have a substantially L-shaped profile, the supporting wire rods **3** are maintained spaced from the periphery of the tire **52** even if the tire **52** is exhausted (see Figure 12).

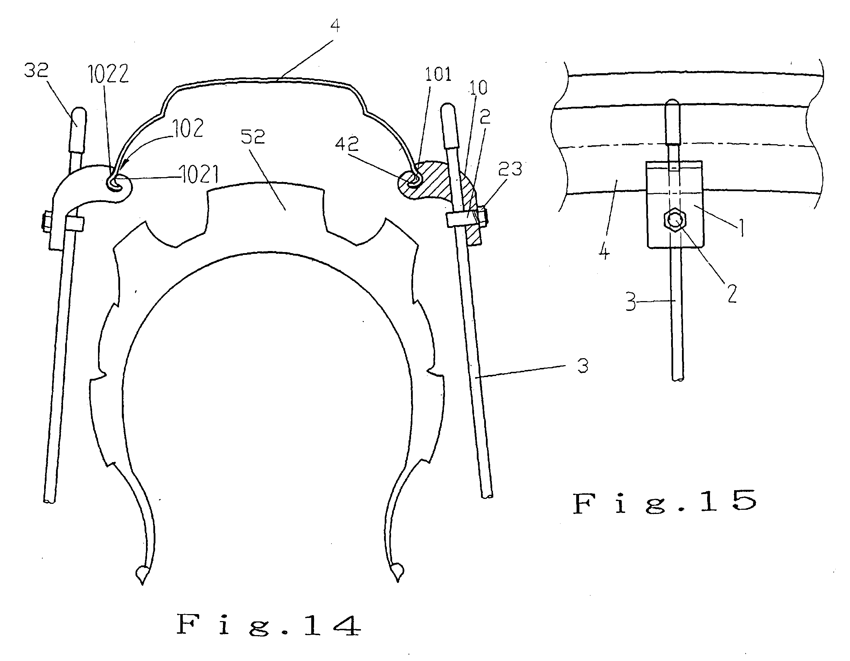

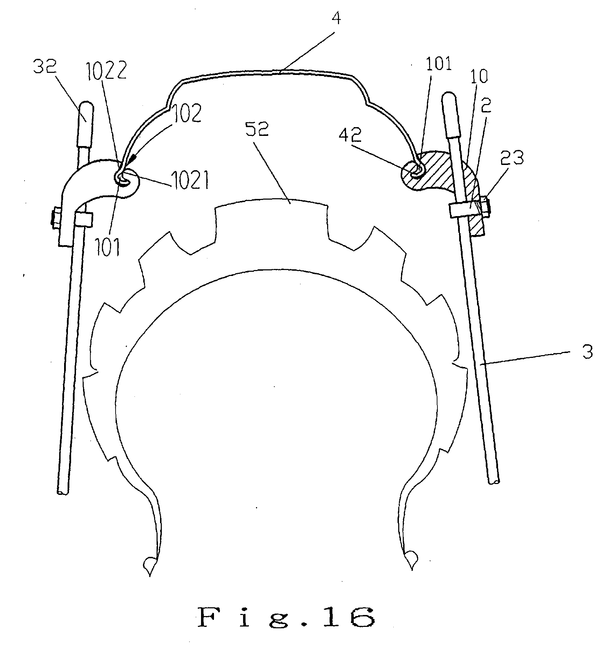

Figures from 13 through 16 show an alternate form of the present invention. According to this alternate form, the fender **4** is made of metal, having two angled peripheral side edges **42** at two opposite lateral sides. The retainer plate, referenced by **10**, comprises a horizontal half and a vertical half, a flat retaining hole **101** transversely disposed at one end of the horizontal half remote from the vertical half two stop edges **1021,1022** transversely disposed at one end of the horizontal half above the retaining hole **12**, and a narrow mouth **102** defined between the stop edges **1021,1022** and extended from the retaining hole **101** at right angles. One stop edge **1021** is curved downwardly inwards toward the retaining hole **101**. When one angled peripheral side edge **4**2 of the fender **4** is inserted through the narrow mouth **102** into the flat retaining hole **101** of the retainer plate **10**, the end cap **32** is fastened to the supporting wire rod **3** and the lack nut **23** is threaded onto the screw rod **2** to fix the retainer plate **10**, the supporting wire rod **3** together, and therefore the engagement between the angled peripheral side edge **42** of the fender **4** and the retainer plate **10** is firmly secured. Because the retainer plate **10** has a substantially L-shaped profile, the supporting wire rod **3** is constantly maintained spaced from the periphery of the tire **52** (see Figure 14 where the tire **52** is fully inflated, and Figure 16 where the tire **52** is exhausted).

It is to be understood that the drawings are designed for purposes of illustration only, and are not intended as a definition of the limits and scope of the invention disclosed.

## Claims

1. A bicycle fender mounting arrangement comprising:
a retainer plate, said retainer plate having a substantially L-shaped profile formed of a horizontal half and a vertical half, a retaining hole transversely disposed at one end of said horizontal half remote from said vertical half, two stop edges transversely disposed at one end of said horizontal half above said retaining hole, a narrow mouth defined between said stop edges in communication with said retaining hole, and a horizontal through hole at said vertical half;
a screw rod inserted through said horizontal through hole an said retainer plate, said screw rod having an outer thread at one end and a transverse through hole at an opposite end;
a supporting wire rod having a tap end inserted through the transverse through hole on said screw rod and connected to said retainer plate and a bottom end connected to a wheel hub of a bicycle wheel;
a lock nut threaded onto the outer thread of said screw rod and stopped against the vertical half of said retainer plate at one side opposite to said supporting wire rod; and
a fender peripherally inserted through the narrow mouth of said retainer plate, said fender having a peripheral side edge engaged into the retaining hole on said retainer plate.

2. The bicycle fender mounting arrangement of claim 1 wherein said retaining hole of said retainer plate has a barrel-like shape, and said peripheral side edge of said fender is a flanged peripheral side edge fitting the barrel-like retaining hole of said retainer plate.

3. The bicycle fender mounting arrangement of claim 2 wherein said stop edges of said retainer plate are vertically extended flat edges arranged in parallel and stopped at two opposite sides of said fender above said flanged peripheral side edge.

4. The bicycle fender mounting arrangement of claim 1 wherein said retaining hole of said retainer plate is a flat retaining hole connected to said month at right angles, and the peripheral side edge of said fender is an angled peripheral side edge inserted through said narrow mouth of said retainer plate and engaged into the flat retaining hole of said retainer plate.

5. The bicycle fender mounting arrangement of claim 4 wherein the stop edges of said retainer plate include a flat outer stop edge stopped at an outer side of said fender, and a downwardly curved stop edge at an inner side stopped at an inner side of said fender.

6. The bicycle fender mounting arrangement of claim 1 wherein said retainer plate further comprises a vertical through hole at said horizontal half between said retaining hole and said vertical half for receiving the top end of said supporting wire rod.

7. The bicycle fender mounting arrangement of claim 6 wherein said supporting wire rod has a top end inserted through the vertical through hole on said retainer plate and fastened up with an end cap above said retainer plate.
